(19) Europäisches Patentamt
European Patent Office
Office européen des brevets

(11) **EP 3 290 906 A1**

(12) **EUROPEAN PATENT APPLICATION**
published in accordance with Art. 153(4) EPC

(43) Date of publication:
**07.03.2018 Bulletin 2018/10**

(51) Int Cl.:
*G01N 21/39* (2006.01)      *G01N 21/3504* (2014.01)

(21) Application number: **15890744.4**

(22) Date of filing: **30.04.2015**

(86) International application number:
**PCT/JP2015/062951**

(87) International publication number:
**WO 2016/174761 (03.11.2016 Gazette 2016/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fuji Electric Co., Ltd.**
**Kawasaki-shi, Kanagawa 210-9530 (JP)**

(72) Inventors:
• **TABARU, Masaya**
  **Kawasaki-shi, Kanagawa 210-9530 (JP)**
• **HIGASHI, Ryoichi**
  **Kawasaki-shi, Kanagawa 210-9530 (JP)**
• **KOIZUMI, Kazuhiro**
  **Kawasaki-shi, Kanagawa 210-9530 (JP)**
• **INUI, Takashi**
  **Kawasaki-shi, Kanagawa 210-9530 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **LASER-TYPE GAS ANALYZER FOR SHIPS**

(57)      A laser type gas analyzer for ships, with a structure in which optical axis deviation hardly occurs, accurately analyzes a gas concentration of measurement target gas contained with a low concentration in exhaust gas and over a long period of time, by performing analysis only in a designated sea area without analysis in a general sea area to eliminate an influence of the exhaust gas in the general sea area. A laser type gas analyzer 1 for a ship is configured such that a cylindrical gas cell 20 is disposed outside a duct 100 and an opening portion 41 of a duct side gas introduction part 40 is provided in a flow path of the duct 100 through which a measurement target gas flows so that a control unit 80 opens an introduction side valve 60 and a lead-out side valve 70 to introduce the exhaust gas into the gas cell 20 only when the exhaust gas containing the measurement target gas with a low concentration flows such as in a designated sea area.

FIG.1

**Description**

[Technical Field]

The present invention relates to a laser type gas analyzer for a ship that is configured to analyze exhaust gas from a diesel engine mounted on a ship.

[Background Art]

Diesel engines for a ship are driven by a marine fuel oil. The marine fuel oil is heavy oil and contains a large amount of sulfur. Thus, the exhaust gas of the diesel engine contains a large amount of harmful substances such as particulate matter (PM) mainly containing carbon and sulfur oxide ($SO_x$). Therefore, limitation of sulfur content in the marine fuel oil is being strengthened due to environmental concerns.

In Annex VI of the MARPOL Convention on Air Pollution from Ships of the International Maritime Organization (IMO) Convention for the Prevention of Marine Pollution (MARPOL 73/78 Convention), the maximum sulfur concentration in marine fuel oil that can be used is separately specified between general sea areas and designated sea areas. This provision fulfilled the requirements for entry into effect in May 2005 and was implemented as a mandatory provision.

The designated sea areas are also called as Sulfur Emission Control Areas (SECAs), specifically the Baltic Sea, the North Sea and the English Channel. The upper limit of a maximum sulfur concentration in marine fuel oil used in the designated sea areas has been specified as 1.5%.

In addition, the general sea areas are other than the designated sea areas. The upper limit of a maximum sulfur concentration in marine fuel oil used in the general sea areas has been specified as 4.5%.

Ships entering these designated sea areas can choose whether to use the marine fuel oil with a sulfur concentration of 1.5% or less, or use an alternative solution with which the emission of the sulfur oxide ($SO_x$) contained in the exhaust gas meets specified limits. Specifically, this alternative solution is an exhaust gas cleaning system which can purify the exhaust gas to have the same level as in a case where the marine fuel oil having the sulfur concentration of 1.5% or less is used, even when the marine fuel oil having the sulfur concentration of 4.5% is used.

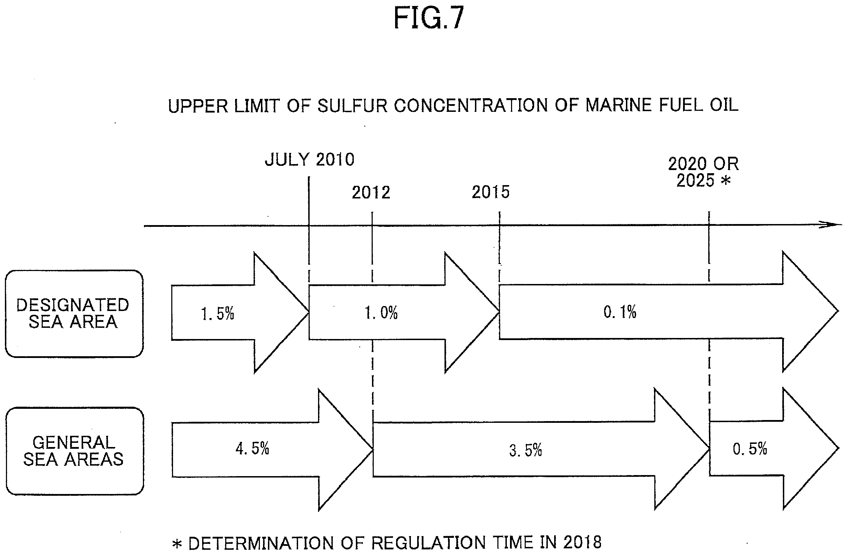

In addition, in April 2008, the Marine Environment Protection Committee (MEPC) held a meeting and agreed on a proposed amendment to the MARPOL Convention Annex VI. According to Annex VI of the revised MARPOL Convention, the upper limit of the sulfur concentration is further strengthened, and as illustrated in FIG. 7, the schedule of enforcement of $SO_x$ / PM regulation (MEPC 58 adoption) was decided.

In the general sea areas, the upper limit of the sulfur concentration of the marine fuel oil has been lowered from 4.5% to 3.5% from 2012, and further the upper limit will be lowered from 3.5% to 0.5% from 2020 (or 2025). In addition, in the designated sea areas, the upper limit of the sulfur concentration of the marine fuel oil has been reduced from 1.5% to 1.0% from July 2010, and further the upper limit has been reduced from 1.0% to 0.1%.

In order to satisfy this regulation, it is conceivable that, after 2015, a low-sulfur fuel oil (MGO: Marine Gas Oil) with a sulfur concentration of 0.1% or less is used for all voyages. As a result, the emission of sulfur oxide ($SO_x$), which is the cause of acid rain, etc., is suppressed, and the emission of the particulate matter (PM) correlated with the sulfur concentration in the marine fuel oil is also suppressed, which can reduce the influence on the atmospheric environment due the ships.

However, the low sulfur fuel oil (MGO) is more expensive than high sulfur fuel oil (HFO: Heavy Fuel Oil). For the shipping industry, using the low sulfur fuel oil (MGO) in the entire course reduces profits due to increased fuel costs. In addition, for the oil refining industry, huge capital investment is required to respond to the increased demand for the low sulfur fuel oil (MGO), and problems such as an increase in $CO_2$ emissions during refining, etc., occur. For the shipbuilding industry, it is necessary to take measures against technical risks by using the low sulfur fuel oil (MGO) that is inferior in lubricity. It was not realistic to use the low sulfur fuel oil (MGO) over the entire course.

As another countermeasure, it is conceivable that a ship operating on an intercontinental route separately uses the low sulfur fuel oil (MGO) and the high sulfur fuel oil (HFO) depending on the sea area. For example, the diesel engine is supplied with the inexpensive high sulfur fuel oil (HFO) in the open ocean's general sea areas, while the diesel engine is supplied with the expensive low sulfur fuel oil (MGO) only in the designated sea areas, that is to say, the Baltic Sea, the North Sea and the English Channel. Although this would optimize the shipping cost of the ship, still using the low sulfur fuel oil (MGO) leaves the problems, such as cost increase due to the equipment increase and technical risk, unsolved.

Therefore, it is realistic to adopt alternatives which are also accepted in Annex VI of the revised MARPOL Convention. This is to install the exhaust gas cleaning system (EGCS: Exhaust Gas Cleaning Systems) on the ship as described above. The exhaust gas cleaning system (EGCS) purifies the exhaust gas so that the emission amount of sulfur oxide ($SO_x$) contained in the exhaust gas satisfies a specific limit value.

This makes it possible to reduce the sulfur oxides ($SO_x$) and the PM emissions to the same extent as when the low sulfur fuel oil (MGO) is used, so that the high sulfur fuel oil (HFO) can be used for cost reduction.

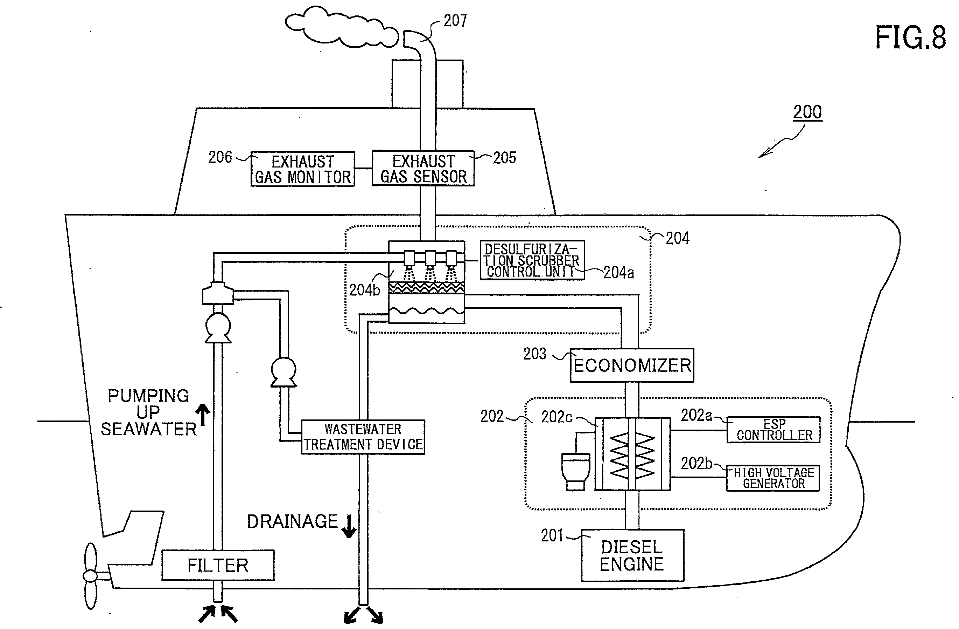

A ship equipped with such an exhaust gas cleaning system (EGCS) is described with reference to FIG. 8. FIG. 8 is an explanatory diagram of a ship focusing particularly on an exhaust gas treatment system of a diesel engine. The ship 200 includes a diesel engine 201, an electrostatic precipitator (ESP) 202, an economizer 203, a desulfurization scrubber 204, an exhaust gas sensor 205, an exhaust gas monitor 206, and a chimney 207.

The ship 200 is a relatively large ship capable of navigating the open ocean. The marine diesel engine 201 mounted on such a large ship 200 is a diesel engine for main engine rotationally driving a screw propeller, or a diesel engine for auxiliary machinery to cover the power supply etc., inside the ship.

From the diesel engine 201, the exhaust gas resulting from combustion of the high sulfur fuel oil (HFO) is discharged. As described above, this exhaust gas contains the particulate matter (PM) mainly containing carbon, and the sulfur oxide ($SO_x$).

At first, the exhaust gas flows to the electrostatic precipitator (ESP) 202 via piping. The electrostatic precipitator (ESP) 202 includes an ESP controller 202a, a high voltage generator 202b, and a dust collector body 202c. A high voltage power supply is supplied to the dust collector body 202c by the high voltage generator 202b, and the operation of the dust collector body 202c is controlled by the ESP controller 202a. The dust collector body 202c efficiently collects the particulate matter (PM) from the exhaust gas to cause the exhaust gas from which the particulate matter (PM) has been removed to flow to the economizer 203.

The economizer 203 exchanges heat with the exhaust gas from which the particulate matter (PM) has been removed, and causes the exhaust gas after the heat exchange to flow to the desulfurization scrubber 204.

The desulfurization scrubber 204 includes a desulfurization scrubber control unit 204a and a seawater scrubber 204b. The operation of the seawater scrubber 204b is controlled by the desulfurization scrubber control unit 204a. In the seawater scrubber 204b, the seawater is injected into the exhaust gas to remove the sulfur oxide ($SO_x$) contained in the exhaust gas.

The exhaust gas sensor 205 is coupled to an exhaust gas monitor 206. The exhaust gas sensor 205 is disposed downstream of the desulfurization scrubber 204, and monitors the exhaust gas containing moisture after flowing through a gas circulation portion of the flue, and being subject to the purification.

Upon receiving the detection signal from the exhaust gas sensor 205, the exhaust gas monitor 206 monitors whether the emission amount of the sulfur oxide ($SO_x$) contained in the exhaust gas meets the specific limit value. Specifically, it is monitored whether the ratio of the concentration of sulfur dioxide gas ($SO_2$) to the concentration of carbon dioxide gas ($CO_2$) is within a predetermined range and proper exhaust gas is generated. Finally, the exhaust gas is discharged from the chimney 207.

The exhaust gas cleaning system (EGCS) of this ship 200 is constituted by the electrostatic precipitator (ESP) 202, the economizer 203, and the desulfurization scrubber 204. Many of the conventional exhaust gas cleaning systems (EGCS) were composed only of wet scrubbers as main equipment, but the conventional exhaust gas cleaning systems were very large devices for treating a large amount of exhaust gas.

On the other hand, the exhaust gas cleaning system (EGCS) illustrated in FIG. 8 eliminates the need for a large-scale wastewater treatment device capable of processing the particulate matter (PM) by arranging the electrostatic precipitator (ESP) 202, in particular, in front of the desulfurization scrubber 204 so that a pollutant load by the particulate matter (PM) of a scrubber drainage is reduced in the desulfurization scrubber 204. In addition, by placing the electrostatic precipitator (ESP) 202 in front of the economizer 203 and the desulfurization scrubber 204, the maintenance frequency of the economizer 203 and the desulfurization scrubber 204 and the risk of occurrence of soot fire are reduced.

The exhaust gas cleaning system (EGCS) illustrated in FIG. 8 is configured with fewer components as a system of the entire ship, and realizes "miniaturization" and "operation cost reduction". By adopting such an exhaust gas cleaning system (EGCS), freedom for an engine outfit design is increased.

It is noted that with respect to ships to be newly built, it is also necessary to take measures to deal with nitrogen oxides (NOx) regulations. Although not illustrated, a well-known denitration scrubber is coupled between the diesel engine 201 and the electrostatic precipitator 202. In this case, the exhaust gas discharged from the diesel engine 201 is caused to react with the nitrogen oxides (NOx) contained in the exhaust gas, by injecting the air containing urea water with a denitration scrubber, to be decomposed into water and nitrogen. Then, the exhaust gas may be supplied to the electrostatic precipitator 202 after the nitrogen oxide (NOx) has been thus removed. The exhaust gas cleaning system (EGCS) may also be equipped with a denitration scrubber. The ship equipped with the exhaust gas cleaning system (EGCS) is as described above.

Now, application of a laser type gas analyzer capable of detecting the sulfur dioxide gas ($SO_2$) and the carbon dioxide gas ($CO_2$) as the exhaust gas sensor 205 has been studied. The laser type gas analyzer can analyze the exhaust gas components at high speed. A conventional technique of such a laser type gas analyzer is disclosed in, for example, Patent Document 1 (Japanese Laid-open Patent Publication No. 2009-47677).

This prior art laser type gas analyzer performs, for example, gas analysis of the exhaust gas passing through the interior of the flue. Two flanges are fixed to the wall of the flue piping such that the flanges are opposed to each other. A light emitting part and a light receiving part are fixed to the flanges, respectively. The light emitting part emits the laser light into the flue and the light receiving part receives the laser light absorbed by the gas to be measured (for example, the sulfur dioxide gas ($SO_2$) or the carbon dioxide gas ($CO_2$)) in the exhaust gas in the flue. Then, the concentration of the measurement target gas in the exhaust gas is measured based on a change in intensity of the laser light. Such a laser type gas analyzer can be adopted.

[Citation List]

[Patent Document]

[Patent Document 1]

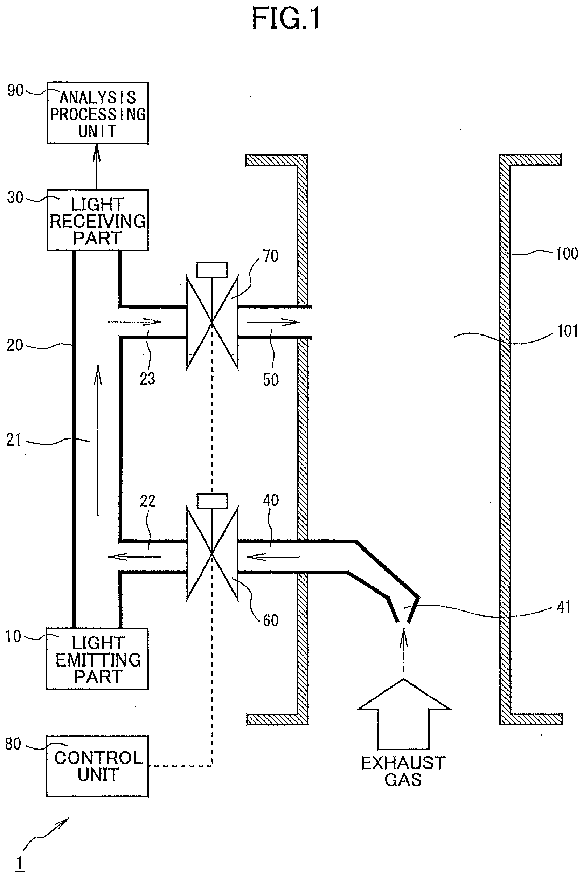

Japanese Laid-open Patent Publication No. 2009-47677 (entitled "Laser type gas analyzer", paragraph numbers [0029] to [0031], FIG. 1

[Summary]

[Technical Problem]

The inventors of the present invention examined the use of the laser type gas analyzer according to the prior art described in Patent Document 1 for exhaust gas analysis from the diesel engine for the ship, but the inventors of the present invention have found that it is not possible to simply apply the laser type gas analyzer according to the prior art in analyzing the exhaust gas from the diesel engine for the ship due to the following reasons (1) to (6).

(1) In the laser type gas analyzer of the prior art, as illustrated in FIG. 1 of Patent Document 1, the light emitting part and the light receiving part are fixedly installed on the flue such that the light emitting part and the light receiving part are opposed to each other with the flue interposed therebetween. However, the ships at sea are vibrated by wind and rain and waves, the flue, the light emitting part, and the light receiving part are also constantly subjected to large vibration. Due to the vibration, a mechanical distortion of the flue and a positional deviation between the light emitting part and the light receiving part with respect to the flue are increased, which causes a problem of a deviation of an optical axis. Also, depending on the installation position, even if the optical axis deviation occurs, a registration adjustment of the laser type gas analyzer may not be possible, and thus accurate gas analysis may not be possible during the voyage.
(2) In order to install and use the laser type gas analyzer as a product, it is necessary to ensure the diameter (optical path length) of the flue channel to be 0.5 m or more. On the other hand, the diameter of the flue of the ship is, for example, about 0.2 m in the case of an exhaust gas flue of a power generation diesel engine, and thus if the laser type gas analyzer of the prior art is adopted as it is, the problem is that the optical path length is short. In the laser type gas analyzer, when the optical path length is short, the low concentration gas cannot be measured accurately (a reason is described hereinafter). It is necessary to make, especially the low concentration gas, measurable due to the strengthened regulation of discharge of the sulfur oxide ($SO_x$), but depending on the size of the diameter of the flue, accurate analysis of the low concentration gas may not be possible.
(3) In the laser type gas analyzer for a ship of the prior art, as illustrated in FIG. 1 of Patent Document 1, there are problems in that the light emitting part and the light receiving part should be precisely mounted on two flanges fixed to the wall of the flue pipe, and then the optical axis should be adjusted accurately, which make it difficult to install the laser type gas analyzer on the flue. There has been a request to implement an easy attachment to the flue while avoiding, as much as possible, a situation that the optical axis between the light emitting part and the light receiving part is affected by the mounting work.
(4) In the laser type gas analyzer of the prior art, as illustrated in FIG. 1 of Patent Document 1, the light emitting part and the light receiving part are attached to two flanges fixed to the wall of the flue pipe. Since the mounting surfaces of these two flanges also serve as a reference for optical axis adjustment, it is necessary to increase mechanical parallelism to some extent. However, it is not easy to implement the attachment to the flange of the flue pipe while ensuring the mechanical precision, and there is also a problem that the manufacturing cost increases.
(5) As described above, in Annex VI of the revised MARPOL Convention, it is necessary to prove by monitoring that the concentration ratio of the sulfur dioxide ($SO_2$) and the carbon dioxide ($CO_2$) conforms to regulations in the designated sea areas.

Taking the ship 200 of FIG. 8 described above as an example, when the exhaust gas cleaning system (EGCS) is in operation, the purified clean exhaust gas flows in the gas circulation portion of the exhaust gas sensor 205, and the inside of the gas circulation portion of the exhaust gas sensor 205 is kept clean. However, when the exhaust gas cleaning system (EGCS) is not in operation, the exhaust gas (raw gas) with a large amount of dust which has not been cleaned flows through the inside of the exhaust gas sensor 205, so that the dust is deposited on the wall surface inside the gas circulation portion of the exhaust gas sensor 205 or on the transparent window, or the $SO_2$ adheres to the wall surface inside the gas circulation portion of the exhaust gas sensor 205 or to the transparent window. As a result, the amount of light decreases, which makes it difficult to accurately measure the gas stably for a long period of time.

Unlike on land, it is difficult for operators (mainly maintenance and inspection workers of measurement equipment makers) to frequently maintain the ships because the ships travel around the world. For this reason, it is desirable to keep the gas circulation portion, which is related to the accuracy of the gas measurement, clean for a long time. It is desirable not to circulate the raw gas as much as possible to the gas circulation portion, but according to the laser type gas analyzer for a ship disclosed in Patent Document 1, the circulation of gas cannot be stopped.

(6) When the ship is in the designated sea areas and the exhaust gas cleaning system (EGCS) is operating, the exhaust gas is purified. Therefore, if the operation of the laser type gas analyzer for a ship is turned on and off according to the operation of the exhaust gas cleaning system (EGCS) and the position of the ship, it becomes possible to keep the gas circulation portion clean for a longer period of time; however, this point was not noticed.

The present invention has been made to solve the above problems, and it is an object to provide a laser type gas analyzer for ships, with a structure in which optical axis deviation hardly occurs, that accurately analyzes a gas concentration of measurement target gas contained with a low concentration in exhaust gas and over a long period of time, by performing analysis only in a designated sea area without analysis in a general sea area to eliminate an influence of the exhaust gas in the general sea area.

[Solution to Problem]

According to a first invention for solving the problems described above, there is a laser type gas analyzer for a ship, the laser type gas analyzer comprising: a gas introduction part having an opening portion, the opening portion being in a flow passage through which exhaust gas flows, the exhaust gas being introduced in the flow passage through the opening portion; a gas cell that is tubular and in fluid communication with the gas introduction part, the gas cell having internal measurement space in which the exhaust gas is introduced; a gas lead-out part that is in fluid communication with the gas cell to lead out the exhaust gas from the measurement space of the gas cell; an introduction side valve configured to open and close the gas introduction part; a lead-out side valve configured to open and close the gas lead-out part; a control unit configured to control opening and closing of the introduction side valve and the lead-out side valve; a light emitting part provided and fixed on one end side of the gas cell and configured to emit a laser light to the exhaust gas in the measurement space of the gas cell; and a light receiving part provided and fixed on the other end side of the gas cell and configured to receive the laser light having passed through the exhaust gas and output a detection signal; wherein the control unit controls the introduction side valve and the lead-out side valve to be opened when the exhaust gas, which contains a measurement target gas with a low concentration, flows, and the introduction side valve and the lead-out side valve to be closed when the exhaust gas, which contains the measurement target gas with a high concentration, flows.

Further, according to a second invention, there is a laser type gas analyzer for a ship, the laser type gas analyzer comprising: a gas introduction part having an opening portion, the opening portion being in a flow passage through which exhaust gas flows, the exhaust gas being introduced in the flow passage through the opening portion; a gas cell that is tubular and in fluid communication with the gas introduction part, the gas cell having internal measurement space in which the exhaust gas is introduced; a plurality of gas lead-out parts that are in fluid communication with the gas cell to lead out the exhaust gas from the measurement space of the gas cell; an introduction side valve configured to open and close the gas introduction part; a plurality of lead-out side valves each configured to open and close a corresponding one of the gas lead-out parts; a control unit configured to control opening and closing of the introduction side valve and the lead-out side valves; a light emitting part provided and fixed on one end side of the gas cell and configured to emit a laser light to the exhaust gas in the measurement space of the gas cell; and a light receiving part provided and fixed on the other end side of the gas cell and configured to receive the laser light having passed through the exhaust gas and output a detection signal; wherein the gas lead-out parts are configured such that a part thereof is in fluid communication with the gas cell at a position between the light emitting part and the gas introduction part, and a remaining part thereof is in fluid communication with the gas cell at a position between the gas introduction part and the light receiving part, the control unit controls the introduction side valve and the lead-out side valves to be opened when the exhaust gas, which contains a measurement target gas with a low concentration, flows, and the introduction side valve and the lead-out side valves to be closed when the exhaust gas, which contains the measurement target gas with a high concentration, flows.

**EP 3 290 906 A1**

Further, according to a third invention, there is a laser type gas analyzer for a ship, the laser type gas analyzer comprising: a gas introduction part having an opening portion, the opening portion being in a flow passage through which exhaust gas flows, the exhaust gas being introduced in the flow passage through the opening portion; a gas cell that is tubular and in fluid communication with the gas introduction part, the gas cell having internal measurement space in which the exhaust gas is introduced; a plurality of gas lead-out parts that are in fluid communication with the gas cell to lead out the exhaust gas from the measurement space of the gas cell; a plurality of purge gas introduction parts that are in fluid communication with the gas cell to introduce purge gas in the measurement space of the gas cell; an introduction side valve configured to open and close the gas introduction part; a plurality of lead-out side valves each configured to open and close a corresponding one of the gas lead-out parts; a control unit configured to control opening and closing of the introduction side valve and the lead-out side valves; a light emitting part provided and fixed on one end side of the gas cell and configured to emit a laser light to the exhaust gas in the measurement space of the gas cell; and a light receiving part provided and fixed on the other end side of the gas cell and configured to receive the laser light having passed through the exhaust gas and output a detection signal; wherein the gas lead-out parts are configured such that a part thereof is in fluid communication with the gas cell at a position between the light emitting part and the gas introduction part, and a remaining part thereof is in fluid communication with the gas cell at a position between the gas introduction part and the light receiving part, the purge gas introduction parts is configured such that a part thereof is in fluid communication with the gas cell at a position closer to the light emitting part, and a remaining part thereof is in fluid communication with the gas cell at a position closer to the light receiving part, the control unit controls the introduction side valve and the lead-out side valves to be opened when the exhaust gas, which contains a measurement target gas with a low concentration, flows, and the introduction side valve and the lead-out side valves to be closed when the exhaust gas, which contains the measurement target gas with a high concentration, flows.

Further, in the first, second, and third inventions, the control unit monitors an operation of an exhaust gas cleaning system of the ship, and the control unit determines that the exhaust gas, which contains the measurement target gas with a low concentration, flows when the exhaust gas cleaning system operates, and determines that the exhaust gas, which contains the measurement target gas with a high concentration, flows when the exhaust gas cleaning system does not operate.

Further, in the first, second, and third inventions, the control unit includes a position information acquisition unit that acquires position information of the ship, and the control unit determines that the exhaust gas cleaning system operates and the exhaust gas, which contains the measurement target gas with a low concentration, flows when the ship is in a designated sea area based on the position information from the position information acquisition unit, and determines that the exhaust gas cleaning system does not operate and the exhaust gas, which contains the measurement target gas with a high concentration, flows when the ship is in a general sea area based on the position information from the position information acquisition unit.

Further, in the first, second, and third inventions, the control unit includes a position information acquisition unit that acquires position information of the ship, and controls the operation of the exhaust gas cleaning system based on the position information, and the control unit causes the exhaust gas cleaning system to operate and determines that the exhaust gas, which contains the measurement target gas with a low concentration, flows when the ship is in a designated sea area based on the position information from the position information acquisition unit, and causes the exhaust gas cleaning system to stop and determines that the exhaust gas, which contains the measurement target gas with a high concentration, flows when the ship is in a general sea area based on the position information from the position information acquisition unit.

[Advantageous Effects of Invention]

According to the present invention, a laser type gas analyzer for ships can be provided, with a structure in which optical axis deviation hardly occurs, which accurately analyzes a gas concentration of measurement target gas contained with a low concentration in exhaust gas and over a long period of time, by performing analysis only in a designated sea area without analysis in a general sea area to eliminate an influence of the exhaust gas in the general sea area.

[Brief Description of Drawings]

FIG. 1 is a configuration diagram of a laser type gas analyzer for a ship according to a first embodiment for carrying out the present invention.
FIG. 2 is a configuration diagram of a laser type gas analyzer for a ship according to a second embodiment for carrying out the present invention.

6

FIG. 3 is a configuration diagram of a laser type gas analyzer for a ship according to a third embodiment for carrying out the present invention.

FIG. 4 is a configuration diagram of a laser type gas analyzer for a ship according to a fourth embodiment for carrying out the present invention.

FIG. 5 is a configuration diagram of a laser type gas analyzer for a ship according to a fifth embodiment for carrying out the present invention.

FIG. 6 is a configuration diagram of a laser type gas analyzer for a ship according to a sixth embodiment for carrying out the present invention.

FIG. 7 is an explanatory diagram of an enforcement schedule of $SO_x \cdot$ PM regulation (MEPC 58 adoption).

FIG. 8 is an explanatory diagram of a ship equipped with an exhaust gas cleaning system (EGCS).

[Description of Embodiments]

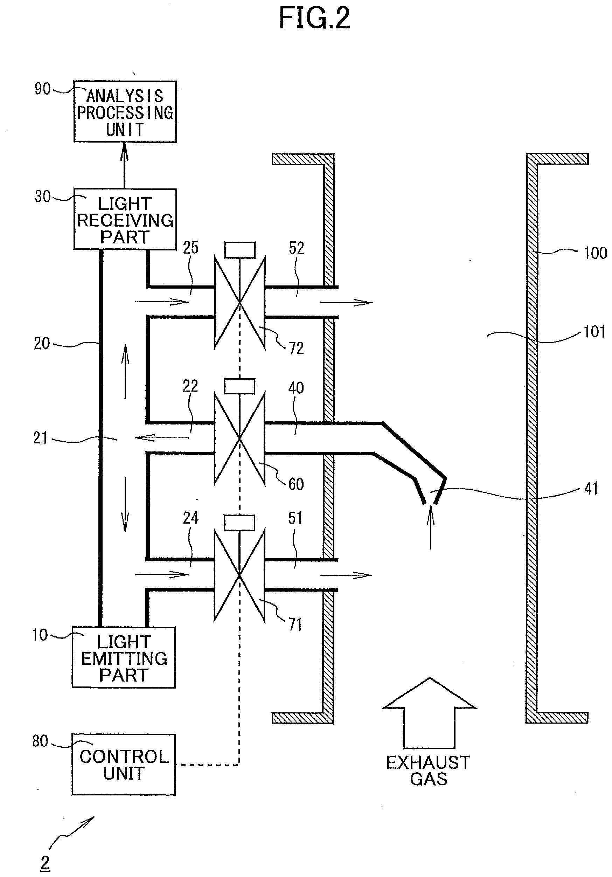

Next, a laser type gas analyzer for a ship according to a first embodiment for carrying out the present invention will be described with reference to the drawings. FIG. 1 is a configuration diagram of a laser type gas analyzer 1 for a ship according to the embodiment. In FIG. 1, thick arrows indicate paths of electrical signals, thin arrows indicate circulation paths of exhaust gas, and broken lines indicate control lines of valves. These lines are also illustrated in Figs. 2 through 6.

At first, elements of the laser type gas analyzer 1 for a ship according to the present embodiment and their functions are described. As illustrated in FIG. 1, the laser type gas analyzer 1 for a ship includes a light emitting part 10, a gas cell 20, a light receiving part 30, a duct side gas introduction part 40, a duct side gas lead-out part 50, an introduction side valve 60, a lead-out side valve 70, and a control unit 80. An analysis processing unit 90 is coupled to the light receiving part 30, and the control unit 80 is coupled to the introduction side valve 60 and the lead-out side valve 70. The analysis processing unit 90 and the control unit 80 may be arranged around the light emitting part 10 or the light receiving part 30 or may be arranged at a remote location via a communication cable.

In such a laser gas analyzer 1 for a ship, the gas cell 20 is supported by the duct side gas introduction part 40 and the duct side gas lead-out part 50, which are fixed to a duct 100, such that the laser type gas analyzer 1 for a ship and the duct 100 are integrally secured.

It is noted that, assuming the case of being mounted on the ship 200 in FIG. 8, what corresponds to the exhaust gas sensor 205 are the light emitting part 10, the gas cell 20, the light receiving part 30, the duct side gas introduction part 40, the duct side gas lead-out part 50, the introduction side valve 60, the lead-out side valve 70 ,and the control unit 80, and what corresponds to the exhaust gas monitor 206 is the analysis processing unit 90.

The light emitting part 10 includes a laser element that emits laser light of a predetermined wavelength. The predetermined wavelength is a wavelength at which the measurement target gas contained in the exhaust gas absorbs the laser light. As described above, the laser light having two kinds of wavelengths is used such that the laser light is absorbed by sulfur dioxide gas ($SO_2$) and carbon dioxide gas ($CO_2$) which are the measurement target gases. The light emitting part 10 has a light transmission window, and the exhaust gas does not enter into the light emitting part 10.

The gas cell 20 further includes a measurement space 21, a cell-side gas introduction part 22, and a cell-side gas lead-out part 23. The gas cell 20 is a tubular body in which the measurement space 21 is formed. The measurement space 21 is a closed space partitioned by an inner wall of a cylindrical portion of the gas cell 20, the light transmission window of the light emitting part 10, and a light transmission window of the light receiving part 30. The inner wall of the gas cell 20 may be, for example, an inner surface of polished stainless steel. This prevents adsorption of the particulate matter (PM) or the like contained in the exhaust gas to the inner wall as much as possible. In the gas cell 20, the cell-side gas introduction part 22 and the cell-side gas lead-out part 23 are in fluid communication with each other. The exhaust gas is introduced into the measurement space 21 of the gas cell 20 through the cell-side gas introduction part 22. Further, the exhaust gas is led out from the measurement space 21 of the gas cell 20 through the cell-side gas lead-out part 23.

The light receiving part 30 has a light receiving element sensitive to the wavelength of the laser light emitted from the laser element of the light emitting part 10. When the laser light passes through the exhaust gas in the measurement space 21 of the gas cell 20, the measurement target gas contained in the exhaust gas absorbs the light, and the laser light reaches with the intensity decreased according to the gas concentration of the measurement target gas contained in the exhaust gas at a predetermined proportion. The light receiving part 30 receives the laser light and outputs a detection signal corresponding to the light intensity. For example, such a configuration can be adopted in which the light emitting part 10 emits the laser light having the wavelength absorbed by the sulfur dioxide gas ($SO_2$) and the laser light having the wavelength absorbed by the carbon dioxide gas ($CO_2$) in a time division manner, and the light receiving part 30 alternately outputs the detection signals. The light receiving part 30 has a light transmission window, and the exhaust gas does not enter the light receiving part 30.

According to the present invention, the gas cell 20, the light emitting part 10, and the light receiving part 30 are provided outside the duct 100, and the degree of freedom of design is high mechanically. Therefore, it is possible to adopt a structure that mechanically and firmly fixes the light emitting part 10 and the light receiving part 30 to the gas cell 20, which increases resistance against vibrations and makes it difficult for the optical axis deviation due to the influence of vibration at the duct 100 to occur. Further, even if the mechanical distortion occurs in the duct 100, an optical detection system including the light emitting part 10, the gas cell 20, and the light receiving part 30 is made less susceptible to the influence of the distortion of the duct 100, which also makes it difficult for the optical axis deviation to occur.

Further, since the light emitting part 10 is attached to one side of the gas cell 20 and the light receiving part 30 is attached to the other side of the gas cell 20, among the opposite sides of the gas cell 20, alignment of the optical axis is also easy, which enables highly accurate detection. Furthermore, since the gas cell 20 is machined as a single piece, it is easy to increase the mechanical precision such as the parallelism of the end faces of the gas cell 20, which also enables a construction in which the optical axis alignment is easy.

An opening portion 41 is formed at one end of the duct side gas introduction part 40. The opening portion 41 is disposed near the approximate center of a flow passage 101 of the duct 100 through which the exhaust gas flows, and introduces the exhaust gas in the flow passage 101. The duct side gas introduction part 40 is coupled and fixed to the cell-side gas introduction part 22 via the introduction side valve 60 so as to be in fluid communication the cell-side gas introduction part 22. The cell-side gas introduction part 22 and the duct-side gas introduction part 40 form the gas introduction part of the present invention.

The opening portion 41 of the duct side gas introduction part 40 is a pipe in a nozzle shape, and has a cross section of the flow passage that is the smallest at the opening portion and gradually increases as going to the gas cell side, so that the opening portion 41 serves as a so-called diffuser. The diffuser converts kinetic energy of the fluid into pressure energy. As a result, the exhaust gas is allowed to pass with a small pressure loss, and the flow is led to the downstream side in a state where the flow is evenly distributed in the flow passage cross section.

According to the present invention, the flow path has such a cross section profile that increases as going to the downstream side, from the nozzle-like opening portion 41 to the duct side gas lead-out part 50 via the duct side gas introduction part 40, the cell-side gas introduction part 22, the measurement space 21, and the cell-side gas lead-out part 23, to reduce the pressure loss.

The duct side gas lead-out part 50 is in fluid communication with the flow passage 101 of the duct 100 through which the exhaust gas flows, and leads the exhaust gas to the flow passage 101. The duct side gas lead-out part 50 is coupled and fixed to the cell-side gas lead-out part 23 via the lead-out side valve 70 so as to be in fluid communication the cell-side gas lead-out part 23. The cell-side gas lead-out part 23 and the duct side gas lead-out part 50 form the gas lead-out part of the present invention.

An introduction side valve 60 is disposed between the cell-side gas introduction part 22 and the duct side gas introduction part 40. The introduction side valve 60 is controlled to open and close by the control unit 80 or manually. At the time of measurement, the introduction side valve 60 is opened to introduce the exhaust gas into the measurement space 21 of the gas cell 20, but when measurement is not being performed, the introduction side valve 60 is closed and the exhaust gas is not introduced into the measurement space 21 of the gas cell 20.

A lead-out side valve 70 is disposed between the cell-side gas lead-out part 23 and the duct side gas lead-out part 50. The lead-out side valve 70 is controlled to open and close by the control unit 80 or manually. At the time of measurement, the lead-out side valve 70 is opened to discharge the exhaust gas from the measurement space 21 of the gas cell 20, but when measurement is not being performed, the lead-out side valve 70 is closed so that the exhaust gas does not enter the measurement space 21 of the gas cell 20.

The control unit 80 controls opening and closing of the introduction side valve 60 and the lead-out side valve 70. When the exhaust gas containing the measurement target gas with a low concentration flows (specifically, when the concentration of the sulfur dioxide gas ($SO_2$) is lower than the concentration of the carbon dioxide gas ($CO_2$)), the control unit 80 controls the introduction side valve 60 and the lead-out side valve 70 to be opened, but when the exhaust gas containing the measurement target gas with a high concentration flows (specifically, the concentration of the sulfur dioxide gas ($SO_2$) is greater than the concentration of the carbon dioxide gas ($CO_2$)), the control unit 80 controls the introduction side valve 60 and the lead-out side valve 70 to be closed.

For example, although not illustrated, an operator who judged that the exhaust gas containing the measurement target gas with a high concentration flows may output a command from a steering room to the control unit 80, and in response to this command, the control unit 80 may control opening and closing of the introduction side valve 60 and the lead-out side valve 70. Various other controls can be adopted.

The analysis processing unit 90 inputs a detection signal indicating the output intensity of the laser light from the light receiving part 30. The analysis processing unit 90 calculates the gas concentration of the measurement target gas in the measurement space 21 of the gas cell 20. The principle of the measurement is an absorption method based on Lambert-Beer's law expressed by the following equation 1.

$$P1 = P0 \cdot \exp(-\varepsilon \cdot c \cdot L) \qquad \text{(equation 1)}$$

Here, P1 is output intensity of the laser light transmitted through the measurement target gas flowing through the measurement space 21, P0 is output intensity of the laser light when not passing through the measurement target gas, $\varepsilon$ is a molar absorption coefficient, c is a gas concentration, and L represents an optical path length. The molar extinction coefficient $\varepsilon$ is uniquely determined when the type of gas and the wavelength of the light source are determined, and since the optical path length L is constant, the ratio of the output intensity P1 to P0 is an exponential function of the gas concentration c. The output intensities P1 and P0 are measured, and the gas concentration is detected by the above equation (1).

Such a laser type gas analyzer 1 for a ship detects the light absorption by the measurement target gas. In other words, in comparison with the case where there is no absorption by the measurement target gas, the light intensity of the laser light received by the light receiving part 30 decreases due to the light absorption, so that the correlation between the decrease in the light intensity and the gas concentration is utilized to measure the gas concentration.

As is apparent from the above equation 1, when the optical path length L is increased, the output intensity P1 at the time of gas detection decreases. Assuming that the influence of dust is sufficiently small, if the optical path length L is made longer, detection of the measurement target gas with a low concentration becomes possible. Therefore, the gas cell 20 is adopted so as to form the measurement space 21 having a sufficiently long optical path length. According to the prior art of Patent Document 1, the optical path length was influenced by the diameter of the flue; however, according to the laser gas analyzer 1 for a ship, the gas cell 20 is independent from the duct 100, and the shape of the gas cell 20 can be arbitrarily designed, so that the gas cell 20 can be lengthened according to the required precision and a necessary optical path length can be ensured.

Instead of a configuration in which the analysis processing unit 90 located in the vicinity carries out operations, a calculation unit incorporated in the light receiving part 30 may perform calculation, then converts the calculated density into digital data to transmit density data to the analysis processing unit 90 at a remote place via a communication cable, and the analysis processing unit 90 may perform various analyzes using the density data. Various configurations of the light receiving part 30 and the analysis processing unit 90 can be adopted.

The duct 100 is a part of the flue, formed of a steel pipe or the like, and has the flow passage 101 formed therein. The opening portion 41 of the duct side gas introduction part 40 is opposed to a flow direction of the exhaust gas flowing in the flow passage 101.

With respect to attachment of the laser type gas analyzer 1 for a ship to the duct 100, for example, the introduction side valve 60 and duct side gas introduction part 40 may be fixed to the cell-side gas introduction part 22 in advance; the lead-out side valve 70 and the duct side gas lead-out part 50 may be fixed to the cell-side gas lead-out part 23 in advance; and then the duct side gas introduction part 40 and the duct side gas lead-out part 50 may be inserted in holes of the duct 100.

In addition, only the duct side gas introduction part 40 and the duct side gas lead-out part 50 may be attached to the duct 100 in advance, and then the cell-side gas introduction part 22 may be fixed to the duct side gas introduction part 40 via the introduction side valve 60, and the cell-side gas lead-out part 23 may be fixed to the duct side gas lead-out part 50 via the lead-out side valve 70. In any case, finally, the laser type gas analyzer 1 for a ship of the present invention can be implemented.

Next, opening and closing control of the valve in the ship is described. In the ship, it is assumed that the high sulfur fuel oil (HFO) is used for the diesel engine for a ship. When the ship is in the general sea area, since the gas analysis is not carried out, the control unit 80 maintains the introduction side valve 60 and the lead-out side valve 70 in the closed state. The exhaust gas is not introduced into the measurement space 21 of the gas cell 20.

When the ship enters the designated sea area, the exhaust gas cleaning system (EGCS) is operated immediately before the designated sea area to start the gas analysis. In the steering room a command is issued to operate the exhaust gas cleaning system (EGCS), and at the same time, when the control unit 80 receives an open instruction from the steering room to open the introduction side valve 60 and the lead-out side valve 70, the control unit 80 controls the introduction side valve 60 and the lead-out side valve 70 to be in the open state.

The exhaust gas is introduced into the measurement space 21 of the gas cell 20 via the duct side gas introduction part 40 and the cell-side gas introduction part 22. At this time, the exhaust gas introduced through the opening portion 41 is introduced into the measurement space 21 of the gas cell 20 while the pressure loss is suppressed. Further, the exhaust gas is led out from the measurement space 21 of the gas cell 20 via the cell-side gas lead-out part 23 and the duct side gas lead-out part 50.

Since the exhaust gas flows into the measurement space 21 of the gas cell 20 in this way, the inside of the gas cell 20 could be contaminated with the exhaust gas. However, the exhaust gas from the diesel engine for a ship has been cleaned through the exhaust gas cleaning system (EGCS) (for example, the electrostatic precipitator (ESP), the economizer, the desulfurization scrubber in FIG. 8). Such an exhaust gas includes a trace amount of the particulate matter (PM) and the measurement target gas ($SO_2$ gas) with a low concentration gas, but it is a relatively clean gas, and thus contamination in the measurement space 21 is extremely slight.

Under such a circumstance, the laser type gas analyzer 1 starts the gas analysis such that the light emitting unit 10 emits the laser light to the exhaust gas, and the light receiving part 30 receives the detection light after the absorption to detect the gas concentration based on the above principle. As a result, the monitoring result of the exhaust gas in the general sea area just before the designated sea area and the monitoring results of the exhaust gas in the designated sea area after the ship has entered the designated sea area are acquired. The laser type gas analyzer 1 for a ship has such a configuration.

The above-described laser type gas analyzer 1 for a ship has the following advantages. (1) In the laser type gas analyzer 1 for a ship of the present invention, by arranging the gas cell 20 outside the duct 100 and firmly fixing the light emitting part 10 and the light receiving part 30 to the opposite ends of the gas cell 20, such a construction is implemented which is resistant to vibrations caused by wind and rain and waves, and makes it difficult for optical axis deviation to occur due to influence of vibrations of the flue including the duct 100. Further, even if the mechanical distortion of the flue including the duct 100 also increases due to vibrations, the influence of the distortion is not exerted on the gas cell 20 disposed outside the duct 100, which prevents the problem that the mechanical distortion of the duct 100 causes the optical axis to deviate from its nominal state. These effects reduce a probability that an accurate analysis cannot be performed during voyage due to the optical axis deviation.

(2) In the laser type gas analyzer 1 for a ship of the present invention, the gas cell 20 is arranged outside the duct 100, and in addition, the measurement space 21 of the gas cell 20 is disposed substantially parallel to the extending direction of the flow passage 101 of the duct 100. Since such a construction increases the degree of freedom of design, the length of the gas cell 20 can be freely set, the optical path length can be set according to the gas concentration to be measured, which enables the low concentration gas to be measured with high accuracy.

(3) An optical axis adjustment largely depends on the structure and mechanical accuracy of the gas cell 20. In other words, the optical axis from the light emitting part 10 to the light receiving part 30 is not affected by the installation operation of the gas cell 20 to the duct 100. Therefore, it is easy to install the laser type gas analyzer 1 for a ship to the duct 100.

(4) Since the gas cell 20 is used as a reference for the optical axis adjustment, the processing of the duct 100 is facilitated, and there is also an advantage that it is possible to reduce processing labor and lower manufacturing cost.

(5) Immediately before the ship enters the designated sea area, the exhaust gas cleaning system (EGCS) is operated, and the introduction side valve 60 and the lead-out side valve 70 are opened to start the gas analysis. In the steering room the command is issued to operate the exhaust gas cleaning system (EGCS), and at the same time, when the control unit 80 receives an open instruction from the steering room to open the introduction side valve 60 and the lead-out side valve 70, the control unit 80 controls the introduction side valve 60 and the lead-out side valve 70 to be in the open state.

According to such control, when the exhaust gas cleaning system (EGCS) is not in operation in the general sea area, the exhaust gas does not flow to the laser type gas analyzer 1 for a ship. Therefore, the particulate matter (PM) or the like is less likely to adhere to the wall surface of the measurement space 21 of the gas cell 20 and the light transmission windows of the light emitting part 10 and the light receiving part 30, and thus a highly accurate detection can be performed over a long period of time. There is an effect of improving the accuracy and stability of the gas concentration measurement.

(6) The exhaust gas flows without staying in the measurement space 21 of the gas cell 20 and finally is discharged to the outside of the gas cell 20, which also leads to such an effect as well that the particulate matter (PM) or the like is less likely to adhere to the wall surface of the measurement space 21 of the gas cell 20 and the light transmission windows of the light emitting part 10 and the light receiving part 30, and thus a highly accurate detection can be performed over a long period of time.

Next, a second embodiment is described with reference to FIG. 2. As illustrated in FIG. 2, a laser type gas analyzer 2 for a ship includes a light emitting part 10, a gas cell 20, a light receiving part 30, a duct side gas introduction part 40, a first duct side gas lead-out part 51, a second duct side gas lead-out part 52, an introduction side valve 60, a first lead-out side valve 71, a second lead-out side valve 72 and a control unit 80. The gas cell 20 includes a measurement space 21, a cell-side gas introduction part 22, a first cell-side gas lead-out part 24, and a second cell-side gas lead-out part 25. An analysis processing unit 90 is coupled to the light receiving part 30, and the control unit 80 is coupled to the introduction side valve 60, the first lead-out side valve 71 and the second lead-out side valve 72. The analysis processing unit 90 and the control unit 80 may be arranged around the light emitting part 10 or the light receiving part 30 or may be arranged at a remote location via a communication cable.

Here, the first cell-side gas lead-out part 24, the second cell-side gas lead-out part 25, the first duct side gas lead-out part 51, the second duct side gas lead-out part 52, the first lead-out side valve 71 and the second lead-out side valve 72 are mainly described, and other components will be denoted by the same reference numerals and redundant explanation is omitted.

In such a laser type gas analyzer 2 for a ship, the gas cell 20 is supported by the duct side gas introduction part 40, the first duct side gas lead-out part 51 and the second duct side gas lead-out part 52, which are fixed to the duct 100, such that the laser type gas analyzer 2 for a ship and the duct 100 are integrally secured.

With respect to attachment of the laser type gas analyzer 2 for a ship, for example, the introduction side valve 60 and the duct side gas introduction part 40 may be fixed to the cell-side gas introduction part 22 in advance; the first lead-out side valve 71 and the first duct side gas lead-out part 51 may be fixed to the first cell-side gas lead-out part 24 in advance; the second lead-out side valve 72 and the second duct side gas lead-out part 52 may be fixed to the second cell-side gas lead-out part 25 in advance; and the duct side gas introduction part 40, the first duct side gas lead-out part 51, and the second duct side gas lead-out part 52 may be inserted into the holes of the duct 100.

In addition, only the duct side gas introduction part 40, the first duct side gas lead-out part 51, and the second duct side gas lead-out part 52 may be attached to the duct 100 in advance, and then the cell-side gas introduction part 22 may be fixed to the duct side gas introduction part 40 via the introduction side valve 60, the first cell-side gas lead-out part 24 may be fixed to the first duct side gas lead-out part 51 via the first lead-out side valve 71, and the second cell-side gas lead-out part 25 may be fixed to the second duct side gas lead-out part 52 via the second lead-out side valve 72. In any case, finally, the laser type gas analyzer 2 for a ship of the present invention can be implemented.

Such a laser type gas analyzer 2 for a ship differs from the laser type gas analyzer 1 for a ship described above with reference to FIG. 1, in particular, in that the duct side gas introduction part 40 and the cell-side gas introduction part 22 form the gas introduction part of the present invention; the flow paths of the first cell-side gas lead-out part 24 and the first duct side gas lead-out part 51 are in fluid communication with the gas cell 20 between the light emitting part 10 and the cell-side gas introduction part 22 to form the first gas lead-out part; and the flow paths of the second cell-side gas lead-out part 25 and the second duct side gas lead-out part 52 are in fluid communication with the gas cell 20 between the cell-side gas introduction part 22 and the light receiving part 30 to form the second gas lead-out part, and thus a plurality of gas lead-out parts of the present invention are formed.

The flow path has such a cross section profile that increases as going to the downstream side, from the nozzle-like opening portion 41 to the measurement space 21 via the duct side gas introduction part 40, the cell-side gas introduction part 22, and the measurement space 21, to reduce the pressure loss. Further, the flow path has such a cross section profile that increases as going to the downstream side, from the measurement space 21 to the first duct side gas lead-out part 51 via the first cell-side gas lead-out part 24, to reduce the pressure loss. Similarly, the flow path has such a cross section profile that increases as going to the downstream side, from the measurement space 21 to the second duct side gas lead-out part 52 via the second cell-side gas lead-out part 25, to reduce the pressure loss.

Further, the introduction side valve 60 is provided between the cell-side gas introduction part 22 and the duct side gas introduction part 40, and the first lead-out side valve 71 is provided between the first cell-side gas lead-out part 24 and the first duct side gas lead-out part 51. Further, the second lead-out side valve 72 is provided between the second cell-side gas lead-out part 25 and the second duct side gas lead-out part 52. Further, the introduction side valve 60, the first lead-out side valve 71, and the second lead-out side valve 72 are controlled to open and close by the control unit 80 or manually.

The operation differs from that of the laser type gas analyzer 1 for a ship described above with reference to FIG. 1, in particular, in that, at the time of measurement, the introduction side valve 60, the first lead-out side valve 71, and the second lead-out side valve 72 are opened to form such a flow path including the duct side gas introduction part 40, the cell-side gas introduction part 22, and the measurement space 21 of the gas cell 20, and the flow path is branched to form a first flow path including the first cell-side gas lead-out part 24 and the first duct side gas lead-out part 51, and a second flow path including the second cell-side gas lead-out part 25 and the second duct side gas lead-out part 52.

Then, the exhaust gas is introduced into the vicinity of the center of the measurement space 21 of the gas cell 20 via the duct side gas introduction part 40 and the cell-side gas introduction part 22, and further branches into and lead out from at two locations, that is to say, the first flow path including the first cell-side gas lead-out part 24 and the first duct side gas lead-out part 51, and the second flow path including the second cell-side gas lead-out part 25 and the second duct side gas lead-out part 52. When measurement is not performed, the introduction side valve 60, the first lead-out side valve 71, and the second lead-out side valve 72 are closed so that exhaust gas is not introduced into the measurement space 21 of the gas cell 20.

As a result, in addition to the effects (1) to (5) above, since the exhaust gas flows without staying in the measurement space 21 of the gas cell 20 and finally is discharged to the outside of the gas cell 20 from the two locations with increased reliability, the particulate matter (PM) or the like is further less likely to adhere to the wall surface of the measurement space 21 of the gas cell 20 and the light transmission windows of the light emitting part 10 and the light receiving part 30, and thus a highly accurate detection can be performed over a long period of time. Such a laser type gas analyzer 2 for a ship may be implemented.

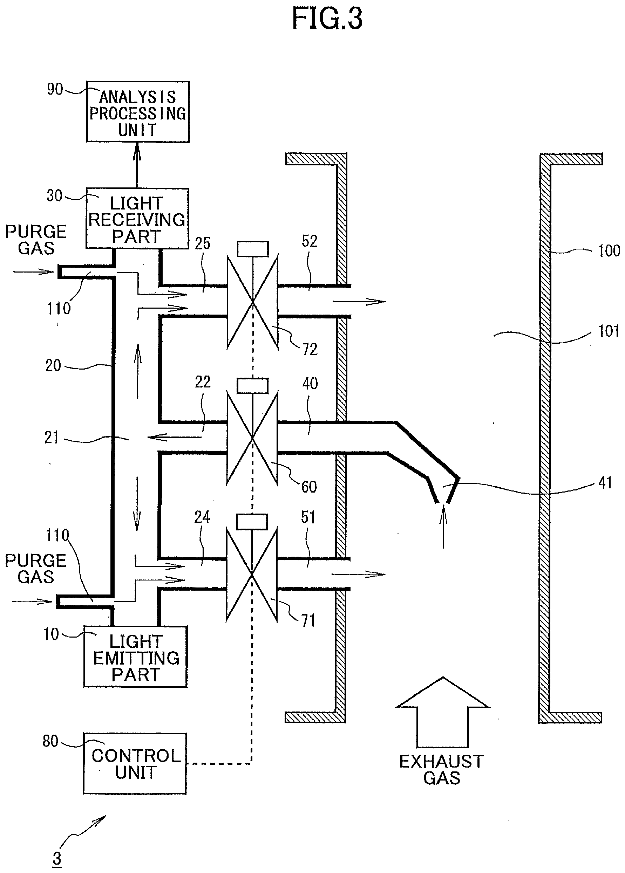

Next, a third embodiment is described with reference to FIG. 3. As illustrated in FIG. 3, a laser type gas analyzer 3 for a ship includes a light emitting part 10, a gas cell 20, a light receiving part 30, a duct side gas introduction part 40, a first duct side gas lead-out part 51, a second duct side gas lead-out part 52, an introduction side valve 60, a first lead-out side valve 71, a second lead-out side valve 72, a control unit 80, and two purge gas introduction parts 110. The gas cell 20 includes a measurement space 21, a cell-side gas introduction part 22, a first cell-side gas lead-out part 24, and a second cell-side gas lead-out part 25. An analysis processing unit 90 is coupled to the light receiving part 30, and the control unit 80 is coupled to the introduction side valve 60, the first lead-out side valve 71 and the second lead-out side valve 72. The analysis processing unit 90 and the control unit 80 may be arranged around the light emitting part 10 or the light receiving part 30 or may be arranged at a remote location via a communication cable.

Here, the purge gas introduction parts 110, which are differences from the second embodiment, are mainly described, the other parts are denoted by the same reference numerals, and redundant explanation is omitted. Further, the attachment of the laser type gas analyzer 3 for a ship to the duct 100 is the same as that of the second embodiment of the laser type gas analyzer 2 for a ship, and redundant explanation is omitted.

Such a laser type gas analyzer 3 for a ship differs from the laser type gas analyzer 2 for a ship described above with reference to FIG. 2, in particular, in that at least one purge gas introduction part 110 is in fluid communication with the gas cell 20 so as to be located in the vicinity of the light emitting part 10 and between the light emitting part 10 and the first cell-side gas lead-out part 24, and at least one purge gas introduction part 110 is in fluid communication with the gas cell 20 so as to be located in the vicinity of the light receiving part 30 and between the light receiving part 30 and the second cell-side gas lead-out part 25, and purge gas is introduced in the vicinity of the light emitting part 10 and the light receiving part 30.

Compared with the second embodiment described with reference to FIG. 2, at the time of measurement, the introduction side valve 60, the first lead-out side valve 71, and the second lead-out side valve 72 are opened to form such a flow path including the duct side gas introduction part 40, the cell-side gas introduction part 22, and the measurement space 21 of the gas cell 20, and the flow path is branched to form a first flow path including the first cell-side gas lead-out part 24 and the first duct side gas lead-out part 51, and a second flow path including the second cell-side gas lead-out part 25 and the second duct side gas lead-out part 52.

In addition, the purge gas is blown around the light emitting part 10 to lead the purge gas from the first cell-side gas lead-out part 24 and the first duct side gas lead-out part 51, thereby forming a flow of the purge gas in the vicinity of the light emitting part 10, which makes it difficult for the exhaust gas to approach the transparent window of the light emitting unit 10. Further, the purge gas is blown around the light receiving part 30 to lead the purge gas from the second cell-side gas lead-out part 25 and the second duct side gas lead-out part 52, thereby forming a flow of the purge gas in the vicinity of the light receiving part 30, which makes it difficult for the exhaust gas to approach the transparent window of the light receiving part 30. It is noted that the purge gas is air or nitrogen gas, and even if the purge gas is present, the laser light is not absorbed, so measurement is not affected.

In addition, when measurement is not performed, the introduction side valve 60, the first lead-out side valve 71, and the second lead-out side valve 72 are closed, and the clean purge gas introduced from the purge gas introduction parts 110 fills the measurement space 21 of the gas cell 20. As a result, even when the exhaust gas cleaning system (EGCS) is not in operation, the inside of the measurement space 21 of the gas cell 20 is kept clean, and the exhaust gas not purified is not circulated in the measurement space 21 of the gas cell 20, which enables stable measurement over a long period of time.

Thus, in addition to the effects (1) to (5) described above, at the time of measurement, the exhaust gas is less likely to reach the light transmission windows of the light emitting part 10 and the light receiving part 30, and the exhaust gas flows through the measurement space 21 of the gas cell 20 without staying in the measurement space 21 of the gas cell 20, so that the exhaust gas eventually is discharged from two locations out of the gas cell 20. Therefore, the particulate matter (PM) or the like is less likely to adhere to the wall surface of the measurement space 21 of the gas cell 20 and the light transmission windows of the light emitting part 10 and the light receiving part 30, and thus a highly accurate detection can be performed over a long period of time. Further, since the measurement space 21 of the gas cell 20 is filled with clean purge gas even when measurement is not performed, the inside of the measurement space 21 of the gas cell 20 is kept clean. Such a laser type gas analyzer 3 for a ship may be implemented.

Next, a fourth embodiment for improving each of the first to third embodiments is described. In the first to third embodiments, the exhaust gas cleaning system (EGCS) is controlled from the steering room, and at the same time the valves are controlled from the steering room via the control unit 80. However, the control system may be simplified such that it is only necessary to open the valves in conjunction with the operation of the exhaust gas cleaning system (EGCS).

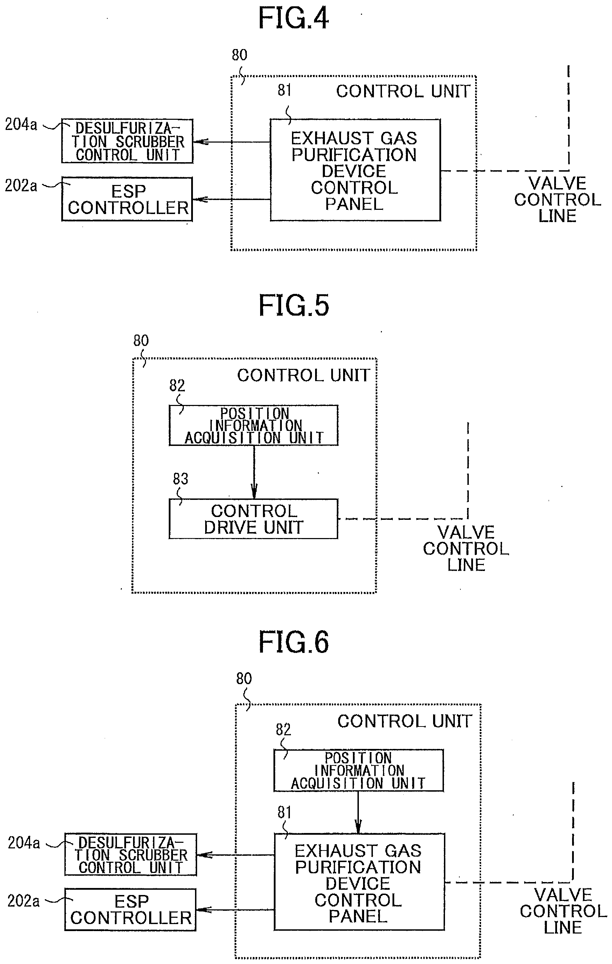

Therefore, as illustrated in FIG. 4, an exhaust gas purification device control panel 81 for controlling the desulfurization scrubber control unit 204a and the ESP controller 202a in FIG. 8 is used as a control unit 80, and the exhaust gas purification device control panel 81 is configured to open the valves when the exhaust gas purification device control panel 81 operates the electrostatic precipitator (ESP) 202 and the desulfurization scrubber 204.

Here, the valves means the introduction side valve 60 and the lead-out side valve 70 in the first embodiment, and the introduction side valve 60, the first lead-out side valve 71, and the second lead-out side valve 72 in the second and third embodiments.

As a result, only the clean exhaust gas, which has been cleaned by the exhaust gas cleaning system (EGCS), flows into the measurement space 21 of the gas cell 20, so that the cleanliness in the measurement space 21 of the gas cell 20 is kept over a long period of time. Therefore, it is possible to accurately measure the gas concentration over a long period of time.

Next, a fifth embodiment for improving each of the first to third embodiments is described. In the first to third embodiments, the exhaust gas cleaning system (EGCS) is controlled from the steering room, and at the same time the valves are controlled from the steering room via the control unit 80. However, a focus is on the point that the exhaust gas cleaning system (EGCS) is in operation when the ship is located in the designated sea area. Therefore, as illustrated in FIG. 5, a position information acquisition unit 82 that utilizes a GPS device or an automatic identification system (AIS) coupled to a control drive unit 83 is used as the control unit 80, and the control drive unit 83 is configured to open the valves when it is determined, based on the position signal from the position information acquisition unit 82, that the ship has entered the specified sea area or when the ship is located near the designated sea area.

Here, the valves means the introduction side valve 60 and the lead-out side valve 70 in the first embodiment, and the introduction side valve 60, the first lead-out side valve 71, and the second lead-out side valve 72 in the second and third embodiments.

As a result, only the clean exhaust gas, which has been cleaned by the exhaust gas cleaning system (EGCS) which operates in the designated sea areas (the areas where the gas should be kept clean), flows into the measurement space 21 of the gas cell 20, so that the cleanliness in the measurement space 21 of the gas cell 20 is kept over a long period of time. Therefore, it is possible to accurately measure the gas concentration over a long period of time.

Next, a sixth embodiment for improving each of the first to third embodiments is described. In the first to third embodiments, the exhaust gas cleaning system (EGCS) is controlled from the steering room, and at the same time the valves are controlled from the steering room via the control unit 80. However, a focus is on the point that the exhaust gas cleaning system (EGCS) operates when located in the designated area.

Therefore, as illustrated in FIG. 6, the position information acquisition unit 82 that utilizes the GPS device or the automatic identification system (AIS) coupled to the exhaust gas purification device control panel 81 for controlling the desulfurization scrubber control unit 204a and the ESP controller 202a is used as the control unit 80, and the exhaust gas purification device control panel 81 controls the desulfurization scrubber control unit 204a and the ESP controller 202a to operate the electrostatic precipitator (ESP) 202 and the desulfurization scrubber 204 and opens the valves at the same time.

Here, the valves means the introduction side valve 60 and the lead-out side valve 70 in the first embodiment, and the introduction side valve 60, the first lead-out side valve 71, and the second lead-out side valve 72 in the second and third embodiments.

As a result, only the clean exhaust gas, which has been cleaned by the exhaust gas cleaning system (EGCS) which operates in the designated sea areas (the areas where the gas should be kept clean), flows into the measurement space 21 of the gas cell 20, so that the cleanliness in the measurement space 21 of the gas cell 20 is kept over a long period of time. Therefore, it is possible to accurately measure the gas concentration over a long period of time.

Next, a seventh embodiment for improving each of the first to sixth embodiments is described. In the first to sixth embodiments described above, as illustrated in FIG. 1 to FIG. 3, the description has been made on the assumption that the light emitting part 10 is disposed on the lower side of the gas cell 20 and the light receiving part 30 is disposed on the upper side of the gas cell 20. However, the light receiving part 30 may be disposed on the lower side of the gas cell 20, the light emitting part 10 may be disposed on the upper side of the gas cell 20 such that the laser light may be transmitted downward. Even with such a configuration, the present invention can be implemented, and the same effect can be obtained.

Next, an eighth embodiment for improving each of the first to seventh embodiments is described. In the first to seventh embodiments described above, as illustrated in FIG. 1 to FIG. 3, the description has been made on the assumption that the laser type gas analyzers 1 to 3 for a ship do not include the duct 100. However, the laser type gas analyzers 1 to 3 for a ship and the duct 100 may be integrally configured as a laser type gas analyzers 1 to 3 for a ship, respectively.

In this case, the duct side gas introduction part 40 and the duct side gas lead-out part 50 according to the first embodiment the duct side gas introduction part 40, the first duct side gas lead-out part 51, and the second duct side gas lead-out part 52 according to the second and third embodiments may be preliminarily attached to the duct 100, and the installation of the laser type gas analyzers 1 to 3 for a ship whose optical axis adjustments were previously carried out at the factory is completed by only the attachment to the flue, which leads to cost reduction and cost reduction. It is also possible to be configured in this way.

Next, a ninth embodiment for improving each of the first to eighth embodiments is described. In the above first to eighth embodiments, as described in FIG. 1 to FIG. 3, it has been described as the most preferable configuration that the opening portion 41 is in the shape of a nozzle that expands in diameter to implement the decreased pressure loss;

EP 3 290 906 A1

however, instead of this, a straight tubular opening portion having the same diameter, or a trumpet-like opening portion whose diameter decreases may be adopted since the pressure loss is not excessive. In addition, it has been described as the most preferable configuration that the position of the opening portion 41 is in the vicinity of the center of the flow passage 101 of the duct 100; however, the opening portion 41 may be at any positions other than in the vicinity of the center, because the exhaust gas is still introduced. Even in these cases, it is possible to introduce the exhaust gas into the gas cell 20.

The laser type gas analyzer for a ship of the present invention has been described above. In the present specification, the $SO_2$ gas or the $CO_2$ gas has been exemplified as the measurement target gas. However, it is not limited to these gases. In the future, it is thought that the exhaust gas emitted from the ship will have all of the nitrogen oxide ($NO_x$), the sulfur oxide ($SO_x$) and the carbon dioxide ($CO_2$) regulated. These detections can be made by adapting the wavelength of the light from the light-emitting element of the light emitting part and the light-receiving element of the light receiving part, and such a configuration may be adopted.

[Industrial Applicability]

Such a laser type gas analyzer for a ship of the present invention is suitable for the analysis of the exhaust gas flowing through the flue of the ship.

[Description of Reference Symbols]

| | |
|---|---|
| 1, 2, 3: | laser type gas analyzer for a ship |
| 10: | light emitting part |
| 20: | gas cell |
| 21: | measurement space |
| 22: | cell-side gas introduction part |
| 23: | cell-side gas lead-out part |
| 24: | first cell-side gas lead-out part |
| 25: | second cell-side gas lead-out part |
| 30: | light receiving part |
| 40: | duct side gas introduction part |
| 41: | opening portion |
| 50: | duct side gas lead-out part |
| 51: | first duct side gas lead-out part |
| 52: | second duct side gas lead-out part |
| 60: | introduction side valve |
| 70: | lead-out side valve |
| 71: | first lead-out side valve |
| 72: | second lead-out side valve |
| 80: | control unit |
| 81: | exhaust gas purification device control panel |
| 82: | position information acquisition unit |
| 83: | control drive unit |
| 90: | analysis processing unit |
| 100: | duct |
| 101: | flow passage |
| 110: | purge gas introduction part |

Claims

1. A laser type gas analyzer for a ship, the laser type gas analyzer comprising:

a gas introduction part having an opening portion, the opening portion being in a flow passage through which exhaust gas flows, the exhaust gas being introduced in the flow passage through the opening portion;
a gas cell that is tubular and in fluid communication with the gas introduction part, the gas cell having internal measurement space in which the exhaust gas is introduced;

a gas lead-out part that is in fluid communication with the gas cell to lead out the exhaust gas from the measurement space of the gas cell;
an introduction side valve configured to open and close the gas introduction part;
a lead-out side valve configured to open and close the gas lead-out part;
a control unit configured to control opening and closing of the introduction side valve and the lead-out side valve;
a light emitting part provided and fixed on one end side of the gas cell and configured to emit a laser light to the exhaust gas in the measurement space of the gas cell; and
a light receiving part provided and fixed on the other end side of the gas cell and configured to receive the laser light having passed through the exhaust gas and output a detection signal; wherein
the control unit controls the introduction side valve and the lead-out side valve to be opened when the exhaust gas, which contains a measurement target gas with a low concentration, flows, and the introduction side valve and the lead-out side valve to be closed when the exhaust gas, which contains the measurement target gas with a high concentration, flows.

2. A laser type gas analyzer for a ship, the laser type gas analyzer comprising:

a gas introduction part having an opening portion, the opening portion being in a flow passage through which exhaust gas flows, the exhaust gas being introduced in the flow passage through the opening portion;
a gas cell that is tubular and in fluid communication with the gas introduction part, the gas cell having internal measurement space in which the exhaust gas is introduced;
a plurality of gas lead-out parts that are in fluid communication with the gas cell to lead out the exhaust gas from the measurement space of the gas cell;
an introduction side valve configured to open and close the gas introduction part;
a plurality of lead-out side valves each configured to open and close a corresponding one of the gas lead-out parts;
a control unit configured to control opening and closing of the introduction side valve and the lead-out side valves;
a light emitting part provided and fixed on one end side of the gas cell and configured to emit a laser light to the exhaust gas in the measurement space of the gas cell; and
a light receiving part provided and fixed on the other end side of the gas cell and configured to receive the laser light having passed through the exhaust gas and output a detection signal; wherein
the gas lead-out parts are configured such that a part thereof is in fluid communication with the gas cell at a position between the light emitting part and the gas introduction part, and a remaining part thereof is in fluid communication with the gas cell at a position between the gas introduction part and the light receiving part,
the control unit controls the introduction side valve and the lead-out side valves to be opened when the exhaust gas, which contains a measurement target gas with a low concentration, flows, and the introduction side valve and the lead-out side valves to be closed when the exhaust gas, which contains the measurement target gas with a high concentration, flows.

3. A laser type gas analyzer for a ship, the laser type gas analyzer comprising:

a gas introduction part having an opening portion, the opening portion being in a flow passage through which exhaust gas flows, the exhaust gas being introduced in the flow passage through the opening portion;
a gas cell that is tubular and in fluid communication with the gas introduction part, the gas cell having internal measurement space in which the exhaust gas is introduced;
a plurality of gas lead-out parts that are in fluid communication with the gas cell to lead out the exhaust gas from the measurement space of the gas cell;
a plurality of purge gas introduction parts that are in fluid communication with the gas cell to introduce purge gas in the measurement space of the gas cell;
an introduction side valve configured to open and close the gas introduction part;
a plurality of lead-out side valves each configured to open and close a corresponding one of the gas lead-out parts;
a control unit configured to control opening and closing of the introduction side valve and the lead-out side valves;
a light emitting part provided and fixed on one end side of the gas cell and configured to emit a laser light to the exhaust gas in the measurement space of the gas cell; and
a light receiving part provided and fixed on the other end side of the gas cell and configured to receive the laser light having passed through the exhaust gas and output a detection signal; wherein
the gas lead-out parts are configured such that a part thereof is in fluid communication with the gas cell at a position between the light emitting part and the gas introduction part, and a remaining part thereof is in fluid communication with the gas cell at a position between the gas introduction part and the light receiving part,
the purge gas introduction parts is configured such that a part thereof is in fluid communication with the gas cell at a position closer to the light emitting part, and a remaining part thereof is in fluid communication with the gas cell at a position closer to the light receiving part,
the control unit controls the introduction side valve and the lead-out side valves to be opened when the exhaust gas, which contains a measurement target gas with a low concentration, flows, and the introduction side valve and the lead-out side valves to be closed when the exhaust gas, which contains the measurement target gas with a high concentration, flows.

4. The laser type gas analyzer for a ship according to any one of claims 1 through 3, wherein
the control unit monitors an operation of an exhaust gas cleaning system of the ship, and
the control unit determines that the exhaust gas, which contains the measurement target gas with a low concentration, flows when the exhaust gas cleaning system operates, and determines that the exhaust gas, which contains the measurement target gas with a high concentration, flows when the exhaust gas cleaning system does not operate.

5. The laser type gas analyzer for ship according to any one of claims 1 through 3, wherein
the control unit includes a position information acquisition unit that acquires position information of the ship, and
the control unit determines that the exhaust gas cleaning system operates and the exhaust gas, which contains the measurement target gas with a low concentration, flows when the ship is in a designated sea area based on the position information from the position information acquisition unit, and determines that the exhaust gas cleaning system does not operate and the exhaust gas, which contains the measurement target gas with a high concentration, flows when the ship is in a general sea area based on the position information from the position information acquisition unit.

6. The laser type gas analyzer for ship according to any one of claims 1 through 3, wherein
the control unit includes a position information acquisition unit that acquires position information of the ship, and controls the operation of the exhaust gas cleaning system based on the position information, and
the control unit

causes the exhaust gas cleaning system to operate and determines that the exhaust gas, which contains the measurement target gas with a low concentration, flows when the ship is in a designated sea area based on the position information from the position information acquisition unit, and
causes the exhaust gas cleaning system to stop and determines that the exhaust gas, which contains the measurement target gas with a high concentration, flows when the ship is in a general sea area based on the position information from the position information acquisition unit.

# FIG.1

EP 3 290 906 A1

FIG.2

90 — ANALYSIS PROCESSING UNIT

30 — LIGHT RECEIVING PART

20

21

10 — LIGHT EMITTING PART

80 — CONTROL UNIT

25    52
72
22    40
60
24    51
71

100
101
41

EXHAUST GAS

2

18

FIG.3

EP 3 290 906 A1

19

# FIG.4

80

81 CONTROL UNIT

204a — DESULFURIZA-
TION SCRUBBER
CONTROL UNIT

202a — ESP
CONTROLLER

EXHAUST GAS
PURIFICATION
DEVICE
CONTROL
PANEL

VALVE
CONTROL
LINE

# FIG.5

80

CONTROL UNIT

82

POSITION
INFORMATION
ACQUISITION UNIT

83

CONTROL
DRIVE UNIT

VALVE
CONTROL
LINE

# FIG.6

80

CONTROL UNIT

82

POSITION
INFORMATION
ACQUISITION UNIT

81

204a — DESULFUR IZA-
TION SCRUBBER
CONTROL UNIT

202a — ESP
CONTROLLER

EXHAUST GAS
PURIFICATION
DEVICE
CONTROL
PANEL

VALVE
CONTROL
LINE

# FIG.7

UPPER LIMIT OF SULFUR CONCENTRATION OF MARINE FUEL OIL

* DETERMINATION OF REGULATION TIME IN 2018

EP 3 290 906 A1

FIG.8

200

207

206 EXHAUST GAS MONITOR — EXHAUST GAS SENSOR 205

204
DESULFURIZA-TION SCRUBBER CONTROL UNIT — 204a
204b

203 — ECONOMIZER

PUMPING UP SEAWATER

202 — 202c — 202a ESP CONTROLLER
202b HIGH VOLTAGE GENERATOR

WASTEWATER TREATMENT DEVICE

DRAINAGE

201 — DIESEL ENGINE

FILTER

EP 3 290 906 A1

## INTERNATIONAL SEARCH REPORT

| International application No. |
| --- |
| PCT/JP2015/062951 |

A. CLASSIFICATION OF SUBJECT MATTER
*G01N21/39*(2006.01)i, *G01N21/3504*(2014.01)i

According to International Patent Classification (IPC) or to both national classification and IPC

B. FIELDS SEARCHED

Minimum documentation searched (classification system followed by classification symbols)
G01N21/00-21/61

Documentation searched other than minimum documentation to the extent that such documents are included in the fields searched
Jitsuyo Shinan Koho            1922–1996    Jitsuyo Shinan Toroku Koho    1996–2015
Kokai Jitsuyo Shinan Koho    1971–2015    Toroku Jitsuyo Shinan Koho    1994–2015

Electronic data base consulted during the international search (name of data base and, where practicable, search terms used)
JSTPlus/JST7580(JDreamIII)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2012-137429 A  (Mitsubishi Heavy Industries, Ltd.),<br>19 July 2012 (19.07.2012),<br>paragraphs [0018], [0057] to [0061]; fig. 9<br>(Family: none) | 1-3<br>4-6 |
| Y | JP 2012-052834 A  (Yokogawa Electric Corp.),<br>15 March 2012 (15.03.2012),<br>paragraphs [0007], [0013]; fig. 4<br>(Family: none) | 1-3 |

☒  Further documents are listed in the continuation of Box C.        ☐    See patent family annex.

| * | Special categories of cited documents: |
| --- | --- |
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after  the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>07 July 2015 (07.07.15) | Date of mailing of the international search report<br>21 July 2015 (21.07.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

23

**INTERNATIONAL SEARCH REPORT**

| | International application No. |
|---|---|
| | PCT/JP2015/062951 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 001658/1984(Laid-open No. 114948/1985) (Mitsubishi Heavy Industries, Ltd.), 03 August 1985 (03.08.1985), page 2, line 7 to page 3, line 1; fig. 1 (Family: none) | 1-3 |
| Y | JP 2000-039394 A  (Shimadzu Corp.), 08 February 2000 (08.02.2000), paragraph [0002]; fig. 3, 4 (Family: none) | 1-3 |
| Y | JP 2011-013073 A  (Tsukasa Sokken Co., Ltd.), 20 January 2011 (20.01.2011), paragraphs [0012] to [0014]; fig. 1 (Family: none) | 2,3 |
| A | JP 1-174942 A  (Horiba, Ltd.), 11 July 1989 (11.07.1989), entire text; all drawings & US 5102806 A | 1-6 |
| A | Takashi INUI, Akinori ZUKERAN, "Senpaku-yo Hai Gas Joka Sochi no Kaihatsu -Kaisei MARPOL Joyaku Fuzokusho VI (SOx·PM Kisei) Taio-", Proceeding of the Institute of Electrostatics Japan, 30 November 2013 (30.11.2013), vol.37, no.6, pages 244 to 249 | 1-6 |

Form PCT/ISA/210 (continuation of second sheet) (July 2009)

**REFERENCES CITED IN THE DESCRIPTION**

**Patent documents cited in the description**

• JP 2009047677 A